# EUROPEAN PATENT SPECIFICATION

(11) **EP 3 051 151 B1**
(45) Date of publication and mention of the grant of the patent: **02.01.2019**
(21) Application number: 16152342.8
(22) Date of filing: 22.01.2016
(51) Int. Cl.: F15D 1/14, F15B 1/22, F24D 3/10

(54) **RETROFITTABLE FLOW-THROUGH CONNECTOR ASSEMBLY FOR AN EXPANSION TANK APPARATUS**
NACHRÜSTBARE DURCHLAUFVERBINDERANORDNUNG FÜR EINE AUSDEHNUNGSGEFÄSSVORRICHTUNG
ENSEMBLE CONNECTEUR D'ÉCOULEMENT RÉTROFITTABLE POUR UN APPAREIL À RÉSERVOIR DE DÉTENTE

(30) Priority: 22.01.2015 EP 15152051
(43) Date of publication of application: 03.08.2016
(73) Proprietor: Global Water Solutions Ltd., St Helier JE1 2TR (GB)
(72) Inventor: Staudt, Alexander, 5365 Munsbach (LU)
(74) Representative: Vinsome, Rex Martin

(56) References cited:
- DE-U1- 29 920 433
- US-A- 4 248 269
- US-B1- 6 343 622

## Description

This invention relates to a flow-through connector assembly and an expansion tank apparatus including the same, more particularly to a flow-through connector assembly and a retrofittable flow-through member that releasably engages a pipe connector.

EP 1008812 discloses a flow-through member for an expansion tank. The flow-through member includes a tubular flow-guidance element, an inner sleeve sleeved on the flow-guidance element, a spacer surrounding the inner sleeve, and a cylindrical sleeve sleeved on the spacer. The cylindrical sleeve is fitted into a nipple of the expansion tank, and is provided with a flange edge that extends into the expansion tank and that abuts against an inner wall of the expansion tank. A T-piece has a connection socket that has an inner thread threadedly engaging an outer thread of the nipple. The flow-guidance element extends into the T-piece. The flow-through member has the following drawbacks. Since the flange edge is disposed in the expansion tank and abuts against the inner wall of the expansion tank, the flow-through member must be installed inside the expansion tank before the membrane is installed in the expansion tank, is not retrofittable, and is not suitable for use in a standard expansion tank. In addition, the available sectional area of the nipple for passage of water therethrough is considerably reduced due to the extension of the inner sleeve, the spacer and the cylindrical sleeve into the nipple.

EP 0779477 discloses an expansion vessel that includes a top part, a connecting nipple and a through-flow means having a bush and an inner part. The inner part is installed in the expansion tank. The bush is inserted through the connecting nipple to connect immovably with the inner part. The through-flow means defines two through-flow conduits in the expansion tank. A connecting piece is fitted on the connecting nipple, and has two connector conduits corresponding to the through-flow conduits. The through-flow means has the similar drawbacks mentioned above. In addition, the through-flow means is relatively complicated.

EP 1018623 discloses a flow distributor for an expansion tank that is connected to a pipe system via a connecting conduit which has a connecting opening. The flow distributor includes a pipe section, a flow conduit adjoining the pipe section and disposed in the connecting opening, and a positioning device disposed in the connecting opening and connected to the flow conduit for positioning the flow distributor in the connecting opening. The positioning device includes a spacer ring mounted to a periphery of a first opening of the pipe section, a directional element that is fitted in the connecting opening at a certain distance from the first opening of the pipe section to ensure a predetermined alignment of the flow distributor in the connecting opening. The spacer ring is formed with a plurality of one-way hooks that grasp an inner end of the pipe section.

The aforesaid conventional flow distributor has the drawback that the positioning device is complicated and that the flow distributor is not retrofittable due to the engagement between the one-way hooks and the pipe section. In addition, as this known arrangement engages the main flow pipe, it is limited to a certain pipe diameter and is therefore not useable for bigger pipes.

Another known connector is disclosed in DE U 20014804. However, this known device suffers from the drawback that it includes a flow-through member connected to a tank connection in such a way that angular movement of the flow-through member is not possible and adjustment of the orientation of the flow-through member is therefore not possible.

Therefore, an object of the present invention is to provide a retrofittable flow-through connector assembly that may overcome at least one of the aforesaid drawbacks associated with the prior art.

DE U 29920433 discloses a flow-through connector device according to the preamble of claim 1.

According to an aspect of the present invention, there is provided a flow-through connector device for an expansion tank, the flow-through connector device including a connector adapted to be connected to a conduit having fluid flowing therein, and a flow-through member including a post extending into and
through the connector, wherein the flow-through member is formed with at least one first engaging element, and wherein the connector is formed with at least one second engaging element, characterised in that
the first and second engaging elements are adapted to releasably engage each other such that the flow-through member is prevented from angular movement relative to the connector and such that the flow-through member can be mounted to the connector in a plurality of orientations relative to a direction of fluid flow, such that fluid can enter the flow-through member in a plurality of said orientations when the connector is connected to the conduit.

By providing first and second engaging elements releasably engaging each other such that the flow-through member is prevented from angular movement relative to the connector and such that the flow-through member can be affixed to the connector in a plurality of orientations relative to a direction of fluid flow, such that fluid can enter the flow-through member in a plurality of said orientations when the connector is connected to the conduit, this provides the advantage that a first engaging element can be plugged into an inline pipe connector in various positions after the inline connector has been screwed into a T-piece or pipe. This helps to ensure that the inline connector is not overtightened or leaking when screwed into a T-Piece or pipe, whereas an arrangement for which only one orientation is possible may require almost a full turn after it is perfectly tight just to align the flow guiding element to the flow, which in turn may cause overtightening of the connection and lead to a failure.

According to another aspect of the present invention, there is provided an expansion tank apparatus including an expansion tank and a flow-through connector device as defined above, the expansion tank having a retainer that protrudes outwardly therefrom to engage the connector, wherein the flow-through member extends into and through the retainer.

Preferred embodiments of the invention are described in detail below, by way of example only and not in any limitative sense, with reference to the accompanying drawings, in which
Fig. 1 is a sectional view of a first embodiment of a retrofittable flow-through connector assembly for an expansion tank apparatus according to the present invention;
Fig.2 is a fragmentary exploded perspective view of the first embodiment;
Fig. 3 is a partly sectional view of the first embodiment, illustrating a middle state where protrusions of a flow-through member is to be pressed through a top open end of a conduit portion into a circumferentially extending groove in the conduit portion of a connector;
Fig. 4 is another partly sectional view of the first embodiment, illustrating the middle state from another side;
Fig. 5 is a fragmentary sectional view of the first embodiment assembled with the expansion tank;
Fig. 6 is a sectional view, corresponding to Fig. 1, of an expansion tank apparatus including a flow-through connector of a second embodiment of the invention;
Fig. 7 is a detailed sectional view of part of the apparatus of Figure 6;
Figure 8 is a sectional view in the direction of arrow A in Figure 7; and

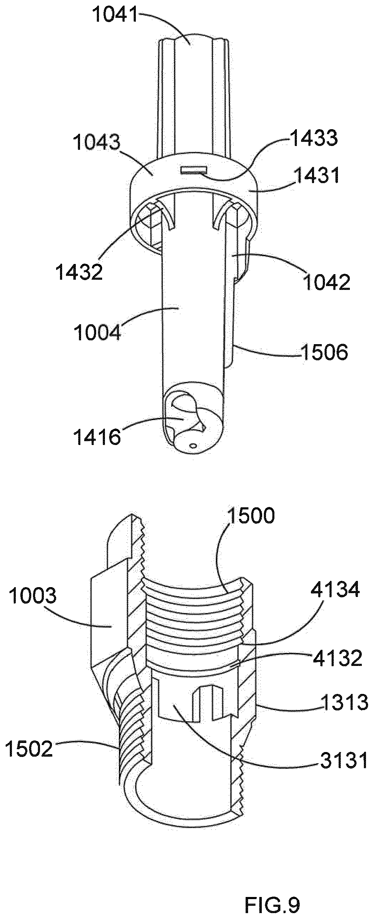

Figure 9 is a perspective view of the connector and flow-through member of the apparatus of Figures 6 to 8.

The following detailed descriptions are provided to illustrate the embodiments of the invention.

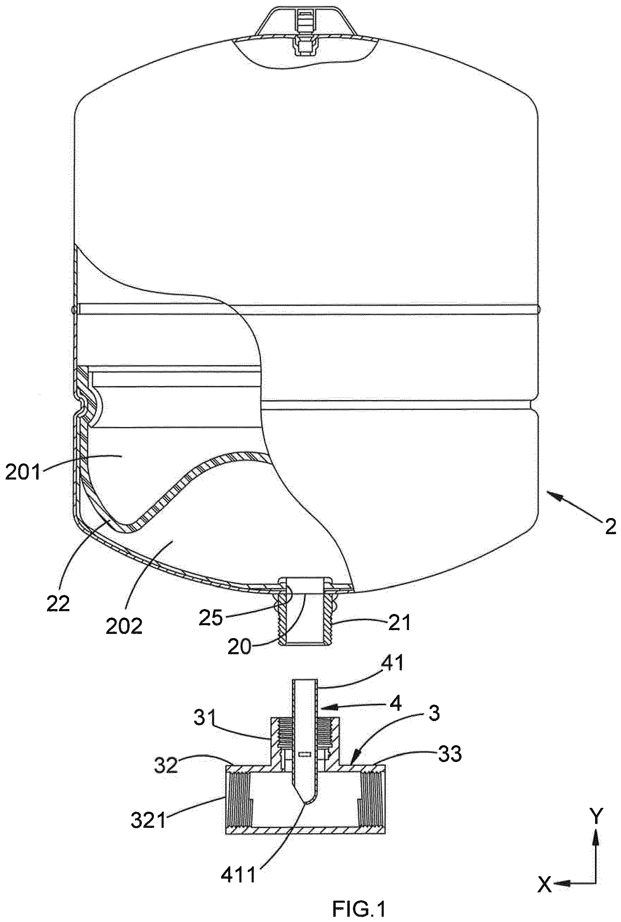

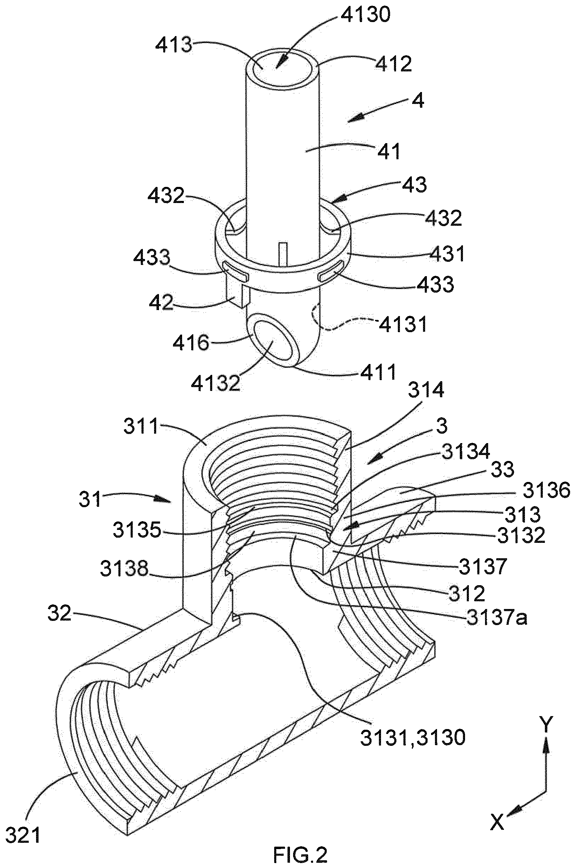

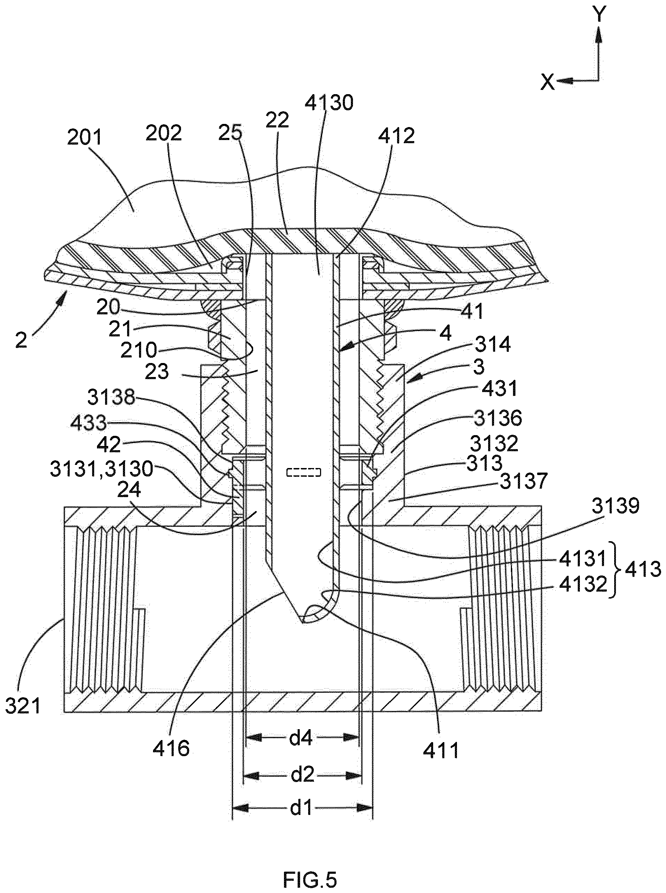

Figs. 1 to 5 illustrate a first embodiment of a retrofittable flow-through connector assembly for an expansion tank apparatus according to the present invention.

The retrofittable flow-through connector assembly includes a three-way pipe connector (3) and a flow-through member (4). The three-way pipe connector (3) has first, second and third conduit portions (31, 32, 33). The first and second conduit portions (31, 32) extend respectively along first and second axial directions (Y, X) which are different from each other. In this embodiment, the three-way pipe connector (3) has a T-shaped configuration. The second conduit portion (32) has an inlet opening (321). The flow-through member (4) includes a post (41) that extends into and through the first conduit portion (31) and that has a bottom end (411) aligned with the inlet opening (321) in the second axial direction (X).

The flow-through member (4) is formed with at least one first engaging element (42). The first conduit portion (31) has top and bottom axial ends (311, 312), a butt end segment (313) that extends from the bottom axial end (312) in the first axial direction (Y) toward the top axial end (311), and a threaded segment (314) that extends from the butt end segment (313) to the top axial end (311) in the first axial direction (Y).

The butt end segment (313) is formed with at least one second engaging element (3131). The first and second engaging elements (42, 3131) releasably engage each other and restrict each other in a selected direction such that the flow-through member (4) is prevented from angular movement or rotation relative to the three-way pipe connector (3) and that the first engaging element (42) is pluggable into and out of the second engaging element (3131) in the first axial direction (Y).

In this embodiment, the first and second engaging elements (42, 3131) releasably engage each other in a tongue-and-groove engaging manner.

The butt end segment (313) is formed with an engaging groove (3130) that is defined by a recess-defining wall which defines the second engaging element (3131), and a circumferentially extending groove (3132) that is disposed above the engaging groove (3130). The flow-through member (4) further includes a connecting element (43) that is connected to the post (41). The first engaging member (42) is in the form of a rectangular tab body that protrudes from the connecting element (43) into the engaging groove (3130). Preferably, the first engaging member (42) is press-fit into the engaging groove (3130).

In this embodiment, the connecting element (43) has a ring portion (431) surrounding the post (41), a plurality of rib portions (432) interconnecting the ring portion (431) and the post (41), and a plurality of protrusions (433) protruding in a radial direction relative to the first axial direction (Y) from the ring portion (431) into the circumferentially extending groove (3132). The first engaging member (42) protrudes from the ring portion (431) in the first axial direction (Y).

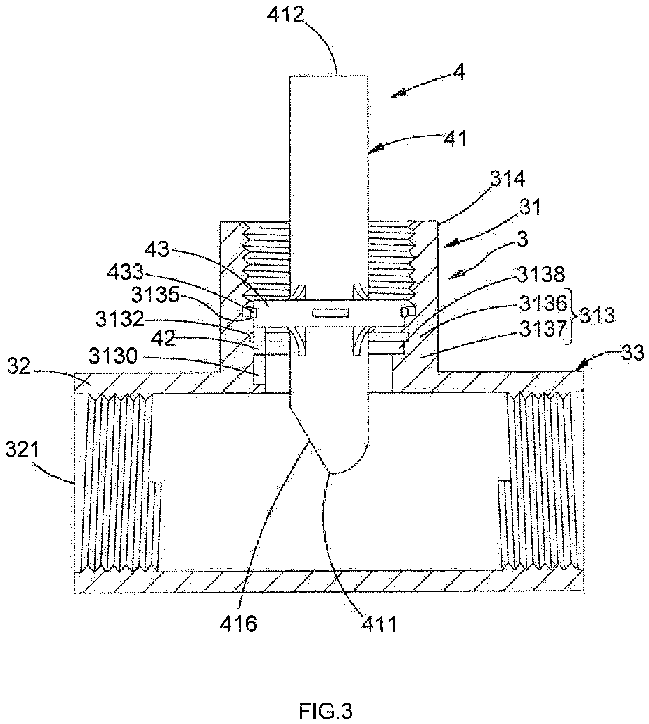

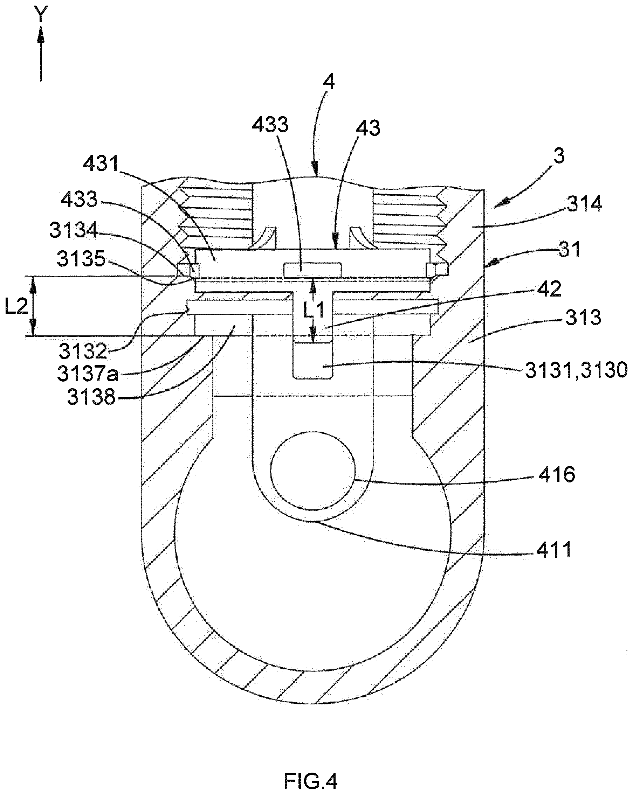

The butt end segment (313) has a chamfered top end (3134) that has a chamfer face (3135) for guiding sliding movement of the protrusions (433) toward the circumferentially extending groove (3132) when the flow-through member (4) is inserted into the first conduit portion (31) as illustrated in Figs. 3 and 4.

The butt end segment (313) has upper and lower sections (3136, 3137). The upper section (3136) has an inner diameter (d1) greater than an inner diameter (d2) of the lower section (3137). The lower section (3137) has a top end (3137a), and is formed with the engaging groove (3130) that extends through the top end (3137a) of the lower section (3137). The upper section (3136) is formed with the circumferentially extending grove (3132), and cooperates with the top end (3137a) of the lower section (3137) to define an annular open recess (3138) therebetween. The ring portion (431) is received in the annular open recess (3138). Preferably, the ring portion (431) has an inner diameter substantially equal to the inner diameter (d2) of the lower section (3137).

Each of the protrusions (433) is axially distanced from a bottom end of the tab body of the first engaging member (42) in the first axial direction (Y) by a first distance (L1). The chamfered top end (3134) of the butt end segment (313) is axially distanced from the top end (3137a) of the lower section (3137) in the first axial direction (Y) by a second distance (L2). The first distance (L1) is greater than the second distance (L2), so that the tab body of the first engaging member (42) may be aligned with engaging groove (3130) and has a small portion received in a top end of the engaging groove (3130) before the protrusions (433) are brought into sliding contact with the chamfer face (3135), which prevents the protrusions (433) from pushing through the chamfered top end (3134) of the butt end segment (313) and being jammed thereat when the tab body is not yet aligned with the engaging groove (3130).

In this embodiment, the post (41) is hollow and further has a top end (412), a bottom opening (416), and an inner surface (413) that defines a fluid channel (4130) and that extends from the top end (412) of the post (41) to the bottom end (411) of the post (41). The inner surface (413) has an axially extending section (4131) that extends in the first axial direction (Y), and an inclined section (4132) that extends inclinedly relative to the first axial direction (Y) from the axially extending section (4131) to the bottom end (411) of the post (41) and that is aligned with the inlet opening (321) in the second axial direction (X). The inner surface (413) serves as a fluid-guiding surface for guiding a liquid (not shown) to flow therealong.

The flow-through member (4) is a single piece, and has a hardness less than that of the three-way pipe connector (3), so that the protrusions (433) can be easily pressed through the chamfered top end (3134) of the butt end segment (313) and into the circumferentially extending groove (3130).

In this embodiment, the expansion tank (2) has a gas chamber (201), a diaphragm (22), a water chamber (202) separated from the gas chamber (201) by the diaphragm (22), and a threaded retainer (or nipple) (21) that protrudes outwardly from a periphery of a bottom hole (20) of the expansion tank (2) to engage threadedly the threaded segment (314). The flow-through member (4) extends into and through the threaded retainer (21). The top and bottom ends (412, 411) of the post (41) of the flow-through member (4) are respectively disposed in the water chamber (202) and the three-way pipe connector (3). The disposing of the top end (412) of the post (41) in the water chamber adjacent to the bottom hole (20) has an advantage that the diaphragm (22) can be moved to abut against and supported on the top end (412) of the post (41) when a pushing force is created by a high pressure in the gas chamber to move the diaphragm (22), thereby preventing the diaphragm (22) from being pushed into or out of the threaded retainer (21) and being damaged by the threaded retainer (21) or an inner seal-retainer (25) connected to the threaded retainer (21).

The inner diameter (d2) of the lower section (3137) of the butt end segment (313), which is a minimum inner diameter of the butt end segment (313), is greater than an inner diameter (d4) of the threaded retainer (21). The threaded retainer (21) has an inner surface (212). The post (41) cooperates with the inner surface (210) of the threaded retainer (21) to define an upper fluid passage (23) therebetween for passage of the liquid therethrough. The lower section (3137) of the butt end segment (313) has an inner surface (3139) that cooperates with the post (41) to define a lower fluid passage (24) therebetween for passage of the liquid therethrough. The lower fluid passage (24) has a cross-sectional area substantially equal to or greater than a cross-sectional area of the upper fluid passage (23) .

In operation, the liquid supplied from a liquid source (not shown) flows through the inlet opening (321) and the bottom opening (416) of the post (41) and into the channel (4130) in the post (41), then through the channel into the water chamber (202), and then from the water chamber (202) through the upper and lower fluid passages (23, 24) into the third conduit portion (33), and is discharged from an outlet of the third conduit portion(33), thereby permitting circulation of the liquid inside the water chamber (202) and preventing stagnation of the liquid inside the water chamber (202).

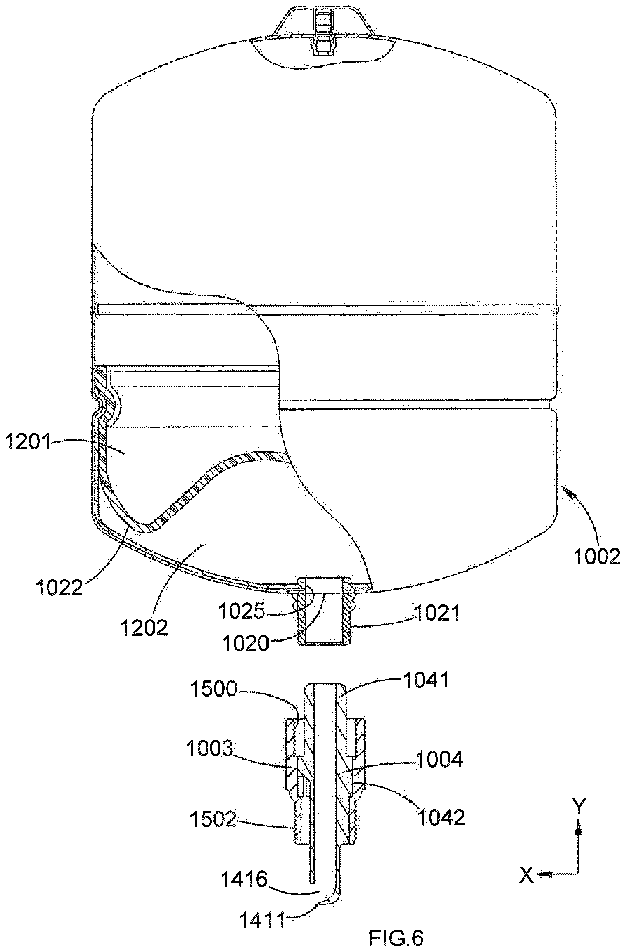

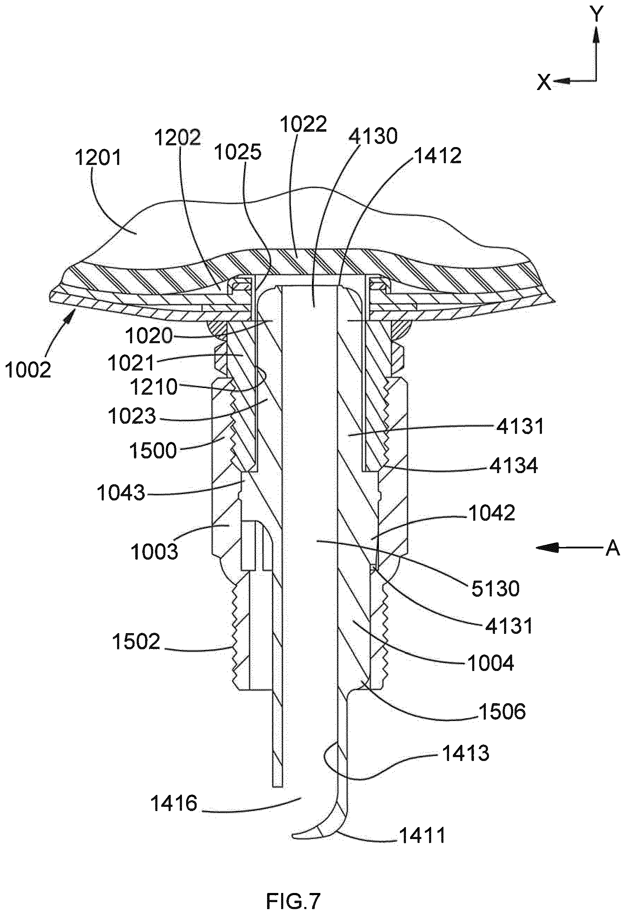

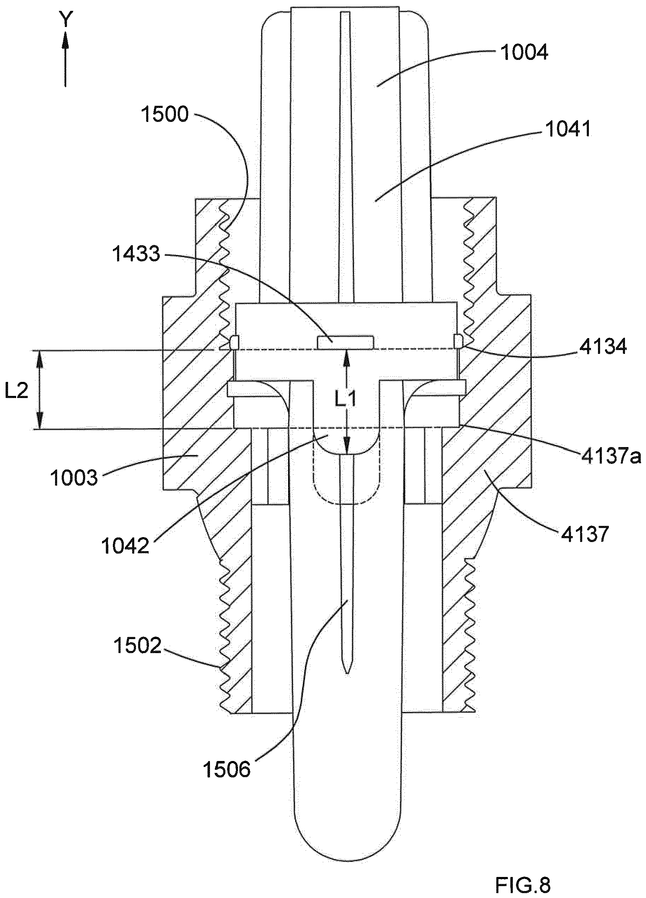

Figs. 6 to 8 illustrate a second embodiment of the retrofittable flow-through connector assembly according to the present invention. Parts common to the embodiment of Figures 1 to 5 are denoted by like reference numerals but increased by 1000.

The retrofittable flow-through connector assembly includes a pipe connector 1003 and a flow-through member 1004. The pipe connector 1003 has a first threaded portion 1500, for engaging threaded retainer 1021 on expansion tank 1002, and second threaded portion 1502 for engaging a pipe (not shown) . The flow-through member 1004 includes a post 1041 that extends into and through the threaded retainer 1021 and a bottom end 1411 aligned with the pipe (not shown).

The flow-through member 1004 is formed with a first engaging element 1042. The connector 1003 is formed with at least one second engaging element 4131. The first and second engaging elements 1042, 4131 releasably engage each other and restrict each other in a selected direction such that the flow-through member 1004 is prevented from angular movement or rotation relative to the pipe connector 1003 and such that the first engaging element 1042 is pluggable into and out of each of the second engaging elements 4131 in the first axial direction Y so that the flow-through member 1004 can be located in a number of orientations relative to the connector 1003. As in the embodiment of Figures 1 to 5, the first and second engaging elements 1042, 4131 releasably engage each other in a tongue-and-groove engaging manner.

The flow-through member 1004 further includes a connecting element 1043 that is connected to the post 1041, and a reinforcing rib 1506 arranged on an external surface of the flow-through member 1004 opposite a fluid inlet 1416 of the flow-through member 1004. The reinforcing rib 1506 minimises the effect of torque applied to the flow-through member 1004 by the fluid flow.

The connecting element 1043 has a ring portion 1431 surrounding the post 1041, a plurality of rib portions 1432 interconnecting the ring portion 1431 and the post 1041, and a plurality of protrusions 1433 protruding in a radial direction relative to the first axial direction Y from the ring portion 1431 into circumferentially extending groove 4132 on the connector 1003. The first engaging member 1042 protrudes from the ring portion 1431 in the first axial direction Y.

Each of the protrusions 1433 is axially distanced from a bottom end of a tab body of the first engaging member 1042 in the first axial direction Y by a first distance L1. A chamfered top end 4134 of a butt end segment 1313 of the connector 1003 is axially distanced from a top end 4137a of a lower section 4137 of the connector 1003 in the first axial direction Y by a second distance L2. The first distance L1 is greater than the second distance L2.

The post 1041 is hollow and further has a top end 1412, a bottom opening 1416, and an inner surface 1413 that defines a fluid channel 5130 and that extends from the top end 1412 of the post 1041 to a bottom end 1411 of the post 1041.

The expansion tank 1002 has a gas chamber 1201, a diaphragm 1022, a water chamber 1202 separated from the gas chamber 1201 by the diaphragm 1022, and threaded retainer 1021 that protrudes outwardly from a periphery of a bottom hole 1020 of the expansion tank 1002 to threadedly engage the upper threaded portion 1500 of connector 1003. The flow-through member 1004 extends into and through the threaded retainer 1021. The top and bottom ends 1412,1411 of the post 1041 of the flow-through member 1004 are respectively disposed in the water chamber 1202 and the pipe (not shown). The disposing of the top end 1412 of the post 1041 in the water chamber adjacent to the bottom hole 1020 has an advantage that the diaphragm 1022 can be moved to abut against and supported on the top end 1412 of the post 1041 when a pushing force is created by a high pressure in the gas chamber to move the diaphragm 1022, thereby preventing the diaphragm 1022 from being pushed into or out of the threaded retainer 1021 and being damaged by the threaded retainer 1021 or an inner seal-retainer 1025 connected to the threaded retainer 1021.

In operation, the connector 1003 is threadedly mounted to a pipe (not shown) and tightened so that the connection between threaded portion 1502 and the pipe is tight enough but not overtightended. The flow-through member 1004 is then located in the connector 1003 so that the most convenient orientation of the flow-through member 1004 relative to the pipe is selected. The assembly of the flow-through member 1004 and the pipe is then mounted to the tank 1002 by threaded engagement of the threaded portion 1500 with the threaded retainer 1021. This enables the risk of leaking or over tightening of the connector 1003 to be minimized if the orientation of the inlet 1416 of the flow-through member 1004 relative to the pipe connection needs to be adjusted.

It will be appreciated by persons skilled in the art that the above embodiments have been described by way of example only, and not in any limitative sense, and that various alterations and modifications are possible without departure from the scope of the invention as defined by the appended claims.

## Claims

1. A flow-through connector device for an expansion tank, the flow-through connector device including a connector (31, 1003) adapted to be connected to a conduit having a fluid flowing therein, and a flow-through member (4, 1004),
wherein the flow-through member includes a post (4, 1041) extending into and through the connector and wherein the flow-through member is formed
with at least one first engaging element (42, 1042),
and wherein
the connector is formed with at least one second engaging element (3131, 4131), **characterised in that**
the first and second engaging elements are adapted to releasably engage each other such that the flow-through member is prevented from angular movement relative to the connector and such that the flow-through member can be mounted to the connector in a plurality of orientations relative to a direction of fluid flow, such that fluid can enter the flow-through member in a plurality of said orientations when the connector is connected to the conduit.

2. The flow-through connector device according to claim 1, wherein the connector has first (31) and second (32) conduit portions extending respectively along first and second directions which are different from each other, the second conduit portion having an inlet opening (321), and wherein the
post (41)
has a bottom end (411) aligned with the inlet opening in the second direction.

3. The flow-through connector device according to claim 2, including one or more of the following features:
(i) wherein the first conduit portion has top (311) and bottom (312) ends, a butt end segment (313) extending from the bottom end in the first direction toward the top end, and a threaded segment (314) extending from the butt end segment to the top end in the first direction;
(ii) wherein at least one said first engaging element is pluggable into and out of at least one said second engaging element in the first direction; or
(iii) wherein the post is hollow and has a top end (412) and an inner surface (413) that defines a fluid channel (4130) and that extends from the top end of the post to a bottom end of the post, the inner surface having an axially extending section (4131) that extends in the first direction, and an inclined section (4132) that extends inclinedly relative to the first direction from the axially extending section to the bottom end of the post and that can be aligned with a flow direction in the conduit.

4. The flow-through connector device according to claim 3, wherein the butt end segment has an inner diameter less than an inner diameter of the threaded segment and has a top end (3134), and an engaging groove (3130) extending through the top end of the butt end segment.

5. The flow-through connector device according to any one of the preceding claims, wherein at least one said first engaging element and at least one said second engaging element releasably engage each other in a tongue-and-groove engaging manner.

6. The flow-through connector device according to any one of the preceding claims, wherein the connector is formed with at least one engaging groove defined by a recess-defining wall which defines at least one said second engaging element, the flow-through member further including at least one connecting element (43) connected to the post, at least one said first engaging member being in the form of a tab body protruding from the connecting element into at least one said engaging groove.

7. The flow-through connector device according to claim 6, wherein the connector is further formed with a circumferentially extending groove (3132) that is disposed above at least one said engaging groove, at least one said connecting element having a ring portion (431) surrounding the post, a plurality of rib portions (432) interconnecting the ring portion and the post, and a plurality of protrusions (433) protruding from the ring portion into the circumferentially extending groove.

8. The flow-through connector device according to claim 7, wherein the connector has a chamfered top end (3134) that has a chamfer face (3135) for guiding sliding movement of the protrusions toward the circumferentially extending groove when the flow-through member is inserted into the connector.

9. The flow-through connector device according to claim 7 or 8, wherein the connector has upper (3136) and lower (3137) sections, the upper section having an inner diameter greater than an inner diameter of the lower section, the lower section having a top end (3137a) and being formed with the engaging groove that extends through the top end of the lower section, the upper section being formed with the circumferentially extending grove and cooperating with the top end of the lower section to define an annular open recess (3138) therebetween, the ring portion being received in the annular open recess.

10. The flow-through connector device according to claim 9, wherein each of the protrusions is axially distanced from a bottom end of the tab body of the first engaging member by a first distance, the chamfered top end of the connector being axially distanced from the top end of the lower section by a second distance, the first distance being greater than the second distance.

11. The flow-through connector device according to any one of the preceding claims, wherein the flow-through member is a single piece and has a hardness less than that of the connector.

12. An expansion tank apparatus including an expansion tank (2, 1002) and a flow-through connector device according to any one of the preceding claims, the expansion tank having a retainer (21, 1021) that protrudes outwardly therefrom to engage the connector, wherein the flow-through member extends into and through the retainer.

13. The expansion tank apparatus according to claim 12, including one or more of the following features:
(i) wherein at least one said first engaging element and at least one said second engaging element releasably engage each other in a tongue-and-groove engaging manner, such that the first engaging element is pluggable into and out of the second engaging element;
(ii) wherein the expansion tank further has a gas chamber (201, 1201), a diaphragm (22, 1022), and a water chamber (202, 1202) separated from the gas chamber by the diaphragm, the flow-through member having two opposite ends respectively disposed in the water chamber and the connector; or
(iii) wherein the connector has a minimum inner diameter substantially equal to or greater than an inner diameter of the retainer, the retainer having an inner surface, the flow-through member cooperating with the inner surface of the retainer to define an upper fluid passage therebetween for passage of a liquid therethrough, the connector having an inner surface that cooperates with the flow-through member to define a lower fluid passage therebetween for passage of the liquid therethrough, the lower fluid passage having a cross-sectional area substantially equal to or greater than a cross-sectional area of the upper fluid passage.

14. The flow-through connector device
according to any one of claims 1 to 11, further comprising a reinforced rear rib (1506) opposite an inlet opening of the flow-through member that aligns to an inner surface of a lower section of the connector to reduce the torque on the flow-through member created by the flow in the conduit.

15. The flow-through connector device
according to any one of claims 1 to 11 or 14, further comprising an extended connecting element (1043) along an upper part of a post of the flow-through member that aligns to an inner surface of a retainer to reinforce the post in the event that the post collides with a membrane.

## Patentansprüche

1. Durchflussverbinderanordnung für einen Ausdehnungsbehälter, wobei die Durchflussverbinderanordnung einen Konnektor (31, 1003) enthält, welcher dazu eingerichtet ist, um mit einer Leitung verbunden zu werden, in welcher Flüssigkeit fließt, und ein Durchflusselement (4, 1004),
wobei das Durchflusselement einen Stift (41, 1041) enthält, der sich in den Konnektor hinein und durch den Konnektor erstreckt, und wobei das Durchflusselement mit mindestens einem ersten eingreifenden Element (42, 1042) ausgestaltet ist, und wobei der Konnektor mit mindestens einem zweiten eingreifenden Element (3131, 4131) ausgestaltet ist,
**dadurch gekennzeichnet, dass**
die ersten und zweiten eingreifenden Elemente dazu eingerichtet sind, um lösbar ineinander einzugreifen, so dass das Durchflusselement an einer Drehbewegung relativ zu dem Konnektor gehindert wird, und so dass das Durchflusselement an dem Konnektor in einer Vielzahl von Ausrichtungen relativ zu einer Richtung der Flüssigkeitsströmung montiert werden kann, so dass Flüssigkeit in das Durchflusselement in einer Vielzahl von besagten Ausrichtungen hineinfließen kann, wenn der Konnektor mit der Leitung verbunden ist.

2. Die Durchflussverbinderanordnung nach Anspruch 1, wobei der Konnektor erste (31) und zweite (32) Leitungsteile hat, welche sich entsprechend entlang erster und zweiter Richtungen erstrecken, welche unterschiedlich voneinander sind, wobei der zweite Leitungsteil eine Einlassöffnung (321) hat, und wobei der Stift (41) ein unteres Ende (411) hat, welches mit der Einlassöffnung in der zweiten Richtung ausgerichtet ist.

3. Die Durchflussverbinderanordnung nach Anspruch 2, welche eine oder mehrere der folgenden Eigenschaften aufweist:
(i) wobei der erste Leitungsteil ein oberes (311) und ein unteres (312) Ende hat, ein stumpfes Endsegment (313), welches sich von dem unteren Ende in der ersten Richtung zu dem oberen Ende erstreckt, und ein mit einem Gewinde versehenes Segment (314), welches sich von dem stumpfen Endsegment zu dem oberen Ende in der ersten Richtung erstreckt;
(ii) wobei mindestens ein besagtes erstes eingreifendes Element in mindestens ein besagtes zweites eingreifendes Element hinein und aus mindestens einem besagten zweiten eingreifenden Element heraus in der ersten Richtung steckbar ist; oder
(iii) wobei der Stift hohl ist und ein oberes Ende (412) und eine innere Oberfläche (413) hat, welche einen Flüssigkeitskanal (4130) definiert, und welche sich von dem oberen Ende des Stifts zu einem unteren Ende des Stifts erstreckt, wobei die innere Oberfläche einen sich axial erstreckenden Abschnitt (4131) hat, welcher sich in die erste Richtung erstreckt, und einen geneigten Abschnitt (4132), welcher sich geneigt bezüglich zu der ersten Richtung von dem sich axial erstreckenden Abschnitt zu dem unteren Ende des Stifts erstreckt, und das mit einer Flussrichtung in der Leitung ausgerichtet werden kann.

4. Die Durchflussverbinderanordnung nach Anspruch 3, wobei das stumpfe Endsegment einen inneren Durchmesser hat, der kleiner ist als ein innerer Durchmesser des mit dem Gewinde versehenen Segments, und ein oberes Ende (3134) hat, und eine eingreifende Rille (3130), welche sich durch das obere Ende des stumpfen Endsegments erstreckt.

5. Die Durchflussverbinderanordnung nach einem der vorstehenden Ansprüche, wobei mindestens ein besagtes erstes eingreifendes Element und mindestens ein besagtes zweites eingreifendes Element lösbar ineinander eingreifen in der Art einer Nut-Feder-Verbindung.

6. Die Durchflussverbinderanordnung nach einem der vorstehenden Ansprüche, wobei der Konnektor ausgebildet ist mit mindestens einer eingreifenden Rille, die von einer eine Ausnehmung definierenden Wand definiert wird, welche mindestens ein besagtes zweites eingreifendes Element definiert, wobei das Durchflusselement ferner mindestens einen verbindendes Element (43) aufweist, welches mit dem Stift verbunden ist, wobei mindestens ein besagtes erstes eingreifendes Element in Form eines Laschenkörpers ausgebildet ist, welcher von dem verbindenden Element in mindestens eine besagte eingreifende Rille ragt.

7. Die Durchflussverbinderanordnung nach Anspruch 6, wobei der Konnektor ferner mit einer sich umlaufend erstreckenden Rille (3132) ausgebildet ist, welche über mindestens einer besagten eingreifenden Rille angeordnet ist, wobei mindestens ein besagtes verbindendes Element ein Ringteil (431), welches den Stift umgibt, eine Vielzahl von Verrippungsteilen (432), welche das Ringteil und den Stift miteinander verbinden, und eine Vielzahl von Vorsprüngen (433), welche aus dem Ringteil heraus in die sich umlaufend erstreckende Rille ragen, umfasst.

8. Die Durchflussverbinderanordnung nach Anspruch 7, wobei der Konnektor ein angefastes oberes Ende (3134) hat, welches eine Fasenfläche (3135) zum Führen einer gleitenden Bewegung der Vorsprünge auf die sich umlaufend erstreckende Rille zu, wenn das Durchflusselement in den Konnektor eingesetzt wird, aufweist.

9. Die Durchflussverbinderanordnung nach Anspruch 7 oder 8, wobei der Konnektor obere (3136) und untere (3137) Abschnitte hat, wobei der obere Abschnitt einen inneren Durchmesser hat, welcher größer ist als ein innerer Durchmesser des unteren Abschnitts, wobei der untere Abschnitt ein oberes Ende (3137a) hat und mit der eingreifenden Rille ausgebildet ist, welche sich durch das obere Ende des unteren Abschnitts erstreckt, wobei der obere Abschnitt mit der sich umlaufend erstreckenden Rille ausgebildet ist, und mit dem oberen Ende des unteren Abschnitts zusammenwirkt, um eine ringförmige offene Vertiefung (3138) dazwischen zu definieren, wobei das Ringteil in der ringförmigen offenen Vertiefung aufgenommen ist.

10. Die Durchflussverbinderanordnung nach Anspruch 9, wobei jeder der Vorsprünge axial von einem unteren Ende des Laschenkörpers des ersten eingreifenden Elements um eine erste Distanz beabstandet ist, wobei das angefaste obere Ende des Konnektors axial von dem oberen Ende des unteren Abschnitts um eine zweite Distanz beabstandet ist, wobei die erste Distanz größer ist als die zweite Distanz.

11. Die Durchflussverbinderanordnung nach einem der vorstehenden Ansprüche, wobei das Durchflusselement ein einzelnes Stück ist und eine geringere Härte als der Konnektor hat.

12. Eine Ausdehnungsbehältereinrichtung, welche einen Ausdehnungsbehälter (2, 1002) und eine Durchflussverbinderanordnung nach einem der vorstehenden Ansprüche beinhaltet, wobei der Ausdehnungsbehälter einen Halter (21, 1021) hat, welcher von dort nach außen ragt, um in den Konnektor einzugreifen, wobei das Durchflusselement sich in den Halter hinein und durch den Halter erstreckt.

13. Die Ausdehnungsbehältereinrichtung nach Anspruch 12, welche eine oder mehrere der folgenden Eigenschaften aufweist:
(i) wobei mindestens ein besagtes erstes eingreifendes Element und mindestens ein besagtes zweites eingreifendes Element lösbar in der Art einer Nut-Feder-Verbindung ineinander eingreifen, so dass das erste eingreifende Element in das zweite eingreifende Element hinein und aus dem zweiten eingreifenden Element heraus steckbar ist;
(ii) wobei der Ausdehnungsbehälter ferner eine Gaskammer (201, 1201), eine Membran (22, 1022), und eine Wasserkammer (202, 1202) hat, welche von der Gaskammer durch die Membran getrennt ist, wobei das Durchflusselement zwei gegenüberliegende Enden hat, welche entsprechend in der Wasserkammer und in dem Konnektor angeordnet sind; oder
(iii) wobei der Konnektor einen minimalen inneren Durchmesser hat, welcher im Wesentlichen gleich oder größer als ein innerer Durchmesser des Halters ist, wobei der Halter eine innere Oberfläche hat, wobei das Durchflusselement mit der inneren Oberfläche des Halters zusammenwirkt, um einen oberen Flüssigkeitsdurchlauf dazwischen zum Durchlauf einer Flüssigkeit dort hindurch zu definieren, wobei der Konnektor eine innere Oberfläche hat, welche mit dem Durchflusselement zusammenwirkt, um einen unteren Flüssigkeitsdurchlauf dazwischen zum Durchlauf der Flüssigkeit dort hindurch zu definieren, wobei der untere Flüssigkeitsdurchlauf eine Querschnittsfläche hat, welche im Wesentlichen gleich oder größer als eine Querschnittsfläche des oberen Flüssigkeitsdurchlaufs ist.

14. Die Durchflussverbinderanordnung nach einem der Ansprüche 1 bis 11, ferner umfassend eine verstärkte Hinterverrippung (1506) gegenüber einer Einlassöffnung des Durchflusselements, welches zu einer inneren Oberfläche eines unteren Abschnitts des Konnektors ausgerichtet ist, um das Drehmoment auf das Durchflusselement, das durch den Fluss in der Leitung erzeugt wird, zu reduzieren.

15. Die Durchflussverbinderanordnung nach einem der Ansprüche 1 bis 11 oder 14, ferner umfassend ein verlängertes verbindendes Element (1043) entlang eines oberen Teils eines Stifts des Durchflusselements, welches zu einer inneren Oberfläche eines Halters ausgerichtet ist, um den Stift zu verstärken, in dem Fall, dass der Stift mit einer Membran kollidiert.

## Revendications

1. Dispositif à raccord d'écoulement pour un réservoir de détente, le dispositif à raccord d'écoulement comportant un raccord (31, 1003) adapté pour être raccordé à un conduit dans lequel s'écoule un fluide, et un organe d'écoulement (4, 1004),
dans lequel l'organe d'écoulement comporte un montant (41, 1041) s'étendant dans et à travers le raccord et où l'organe d'écoulement est formé d'au moins un premier élément d'engagement (42, 1042), et où
le raccord est formé d'au moins un deuxième élément d'engagement (3131,4131),
**caractérisé en ce que** les premier et deuxième éléments d'engagement sont adaptés pour s'engager de manière amovible l'un avec l'autre de sorte que l'organe d'écoulement soit empêché de se déplacer angulairement par rapport au raccord et de sorte que l'organe d'écoulement puisse être monté sur le raccord selon une pluralité d'orientations par rapport à une direction d'écoulement de fluide, de sorte que le fluide puisse pénétrer dans l'organe d'écoulement selon une pluralité desdites orientations lorsque le raccord est raccordé au conduit.

2. Dispositif à raccord d'écoulement selon la revendication 1, dans lequel le raccord a des première (31) et deuxième (32) parties de conduit s'étendant respectivement le long de première et deuxième directions qui sont différentes l'une de l'autre, la deuxième partie de conduit ayant une ouverture d'entrée (321), et dans lequel le montant (41) a une extrémité inférieure (411) alignée avec l'ouverture d'entrée dans la deuxième direction.

3. Dispositif à raccord d'écoulement selon la revendication 2, comportant une ou plusieurs des caractéristiques suivantes :
(i) dans lequel la première partie de conduit a des extrémités supérieure (311) et inférieure (312), un segment de bout (313) s'étendant de l'extrémité inférieure dans la première direction vers l'extrémité supérieure, et un segment fileté (314) s'étendant du segment de bout à l'extrémité supérieure dans la première direction ;
(ii) dans lequel au moins ledit premier élément d'engagement peut être branché dans au moins ledit deuxième élément d'engagement ou débranché de celui-ci dans la première direction ; ou
(iii) dans lequel le montant est creux et a une extrémité supérieure (412) et une surface interne (413) qui définit un canal de fluide (4130) et qui s'étend de l'extrémité supérieure du montant à une extrémité inférieure du montant, la surface interne ayant une section s'étendant axialement (4131) qui s'étend dans la première direction, et une section inclinée (4132) qui s'étend de manière inclinée par rapport à la première direction de la section s'étendant axialement à l'extrémité inférieure du montant et qui peut être alignée avec une direction d'écoulement dans le conduit.

4. Dispositif à raccord d'écoulement selon la revendication 3, dans lequel le segment de bout a un diamètre interne inférieur au diamètre interne du segment fileté et a une extrémité supérieure (3134), et une rainure d'engagement (3130) s'étendant à travers l'extrémité supérieure du segment de bout.

5. Dispositif à raccord d'écoulement selon l'une quelconque des revendications précédentes, dans lequel au moins ledit premier élément d'engagement et au moins ledit deuxième élément d'engagement s'engagent de manière amovible l'un avec l'autre dans un engagement à languette et à rainure.

6. Dispositif à raccord d'écoulement selon l'une quelconque des revendications précédentes, dans lequel le raccord est formé d'au moins une rainure d'engagement définie par une paroi définissant un évidement qui définit au moins ledit deuxième élément d'engagement, l'organe d'écoulement comportant en outre au moins un élément de raccordement (43) raccordé au montant, au moins ledit premier élément d'engagement ayant la forme d'un corps de patte faisant saillie à partir de l'élément de raccordement dans au moins ladite rainure d'engagement.

7. Dispositif à raccord d'écoulement selon la revendication 6, dans lequel le raccord est en outre formé d'une rainure s'étendant de manière circonférentielle (3132) qui est disposée au-dessus d'au moins ladite rainure d'engagement, d'au moins ledit élément de raccordement ayant une partie de bague (431) entourant le montant, d'une pluralité de parties de nervure (432) raccordant la partie de bague et le montant entre eux, et d'une pluralité de saillies (433) faisant saillie à partir de la partie de bague dans la rainure s'étendant de manière circonférentielle.

8. Dispositif à raccord d'écoulement selon la revendication 7, dans lequel le raccord a une extrémité supérieure chanfreinée (3134) qui a une face de chanfrein (3135) pour guider un mouvement de coulissement des saillies vers la rainure s'étendant de manière circonférentielle lorsque l'organe d'écoulement est inséré dans le raccord.

9. Dispositif à raccord d'écoulement selon la revendication 7 ou 8, dans lequel le raccord a des sections supérieure (3136) et inférieure (3137), la section supérieure ayant un diamètre interne supérieur au diamètre interne de la section inférieure, la section inférieure ayant une extrémité supérieure (3137a) et étant formée de la rainure d'engagement qui s'étend à travers l'extrémité supérieure de la section inférieure, la section supérieure étant formée de la rainure s'étendant de manière circonférentielle et coopérant avec l'extrémité supérieure de la section inférieure pour définir un évidement ouvert annulaire (3138) entre elles, la partie de bague étant reçue dans l'évidement ouvert annulaire.

10. Dispositif à raccord d'écoulement selon la revendication 9, dans lequel chacune des saillies est éloignée axialement d'une extrémité inférieure du corps de patte du premier élément d'engagement d'une première distance, l'extrémité supérieure chanfreinée du raccord étant éloignée axialement de l'extrémité supérieure de la section inférieure d'une deuxième distance, la première distance étant supérieure à la deuxième distance.

11. Dispositif à raccord d'écoulement selon l'une quelconque des revendications précédentes, dans lequel l'organe d'écoulement est constitué d'une seule pièce et présente une dureté inférieure à celle du raccord.

12. Appareil à réservoir de détente comportant un réservoir de détente (2, 1002) et un dispositif à raccord d'écoulement selon l'une quelconque des revendications précédentes, le réservoir de détente ayant un élément de retenue (21, 1021) qui fait saillie vers l'extérieur à partir de celui-ci pour s'engager avec le raccord, où l'organe d'écoulement s'étend dans et à travers l'élément de retenue.

13. Appareil à réservoir de détente selon la revendication 12, comportant une ou plusieurs des caractéristiques suivantes :
(i) dans lequel au moins ledit premier élément d'engagement et au moins ledit deuxième élément d'engagement s'engagent de manière amovible l'un avec l'autre dans un engagement à languette et à rainure, de sorte que le premier élément d'engagement puisse être branché dans le deuxième élément d'engagement et débranché de celui-ci ;
(ii) dans lequel le réservoir de détente a en outre une chambre à gaz (201, 1201), un diaphragme (22, 1022) et une chambre à eau (202, 1202) séparée de la chambre à gaz par le diaphragme, l'organe d'écoulement ayant deux extrémités opposées disposées respectivement dans la chambre à eau et le raccord ; ou
(iii) dans lequel le raccord a un diamètre interne minimal essentiellement supérieur ou égal au diamètre interne de l'élément de retenue, l'élément de retenue ayant une surface interne, l'organe d'écoulement coopérant avec la surface interne de l'élément de retenue pour définir un passage de fluide supérieur entre eux pour le passage d'un liquide à travers celui-ci, le raccord ayant une surface interne qui coopère avec l'organe d'écoulement pour définir un passage de fluide inférieur entre eux pour le passage du liquide à travers celui-ci, le passage de fluide inférieur ayant une surface de section transversale essentiellement supérieure ou égale à une surface de section transversale du passage de fluide supérieur.

14. Dispositif à raccord d'écoulement selon l'une quelconque des revendications 1 à 11, comprenant en outre une nervure arrière renforcée (1506) opposée à une ouverture d'entrée de l'organe d'écoulement qui s'aligne avec une surface interne d'une section inférieure du raccord pour réduire le couple sur l'organe d'écoulement créé par l'écoulement dans le conduit.

15. Dispositif à raccord d'écoulement selon l'une quelconque des revendications 1 à 11 ou 14, comprenant en outre un élément de raccordement étendu (1043) le long d'une partie supérieure d'un montant de l'organe d'écoulement qui s'aligne avec une surface interne d'un élément de retenue pour renforcer le montant dans le cas où le montant entre en collision avec une membrane.
